# DEMANDE DE BREVET EUROPEEN

(11) **EP 2 910 216 A1**
(43) Date de publication de la demande: **26.08.2015**
(21) Numéro de dépôt: 15156428.3
(22) Date de dépôt: 24.02.2015
(51) Int. Cl.: A61D 9/00, A01L 15/00

(54) **Dispositif de stimulation de la vascularisation d'un pied équin**

(30) Priorité: 25.02.2014 FR 1451516
(71) Demandeur: Vaillant, Joseph, 74300 Cluses (FR)
(72) Inventeur: Vaillant, Joseph, 74300 Cluses (FR); D'Arpe, Lorenzo, 40134 Bologna (IT)
(74) Mandataire: Poncet, Jean-François

(57) **Abrégé**

Dispositif (1) de stimulation de la vascularisation d'un pied équin, comprenant une semelle (2) comportant une face proximale (2a) destinée à être fixée directement ou indirectement sous un sabot et comportant une face distale (2b) opposée à la face proximale (2a). Le dispositif (1) comporte également un patin (3) convexe en appui contre la face distale (2b) de la semelle (2) et déplaçable longitudinalement sur la face distale (2b) de la semelle (2) par le biais de moyens de glissière (4).

## Description

La présente invention concerne le domaine équin, et concerne plus particulièrement un dispositif de stimulation de la vascularisation d'un pied équin.

Chez les équidés, il peut être nécessaire de stimuler la vascularisation d'un pied, en particulier dans le cas d'une sole de faible épaisseur, d'une fourbure ou de toute autre insuffisance circulatoire détectable au moyen d'un phlebogramme.

Pour expliquer le phénomène de fourbure, on doit savoir que la paroi du sabot d'un équidé est composée de trois couches. La couche interne est formée de lamelles épidermiques primaires desquelles se détachent des lamelles épidermiques secondaires. Ceci forme le kéraphylle.

A l'intérieur du pied, la troisième phalange est également recouverte de lamelles dermiques, formant le podophylle.

L'adhésion des structures internes du pied (os et tissus mous) avec la paroi du sabot est assurée par l'engrènement du podophylle et du kéraphylle. Cet engrènement se fait un peu à la manière d'une bande Velcro (marque protégée). L'intégrité de l'assemblage du podophylle et du kéraphylle assure au cheval une bonne capacité de marche.

La fourbure conduit à un désengrènement du podophylle et du kéraphylle, et donc à une séparation entre les structures internes du pied et la paroi du sabot.

La fourbure se traduit par une boiterie intense et d'évolution rapide sur les membres antérieurs ou les quatre membres du cheval. Les conséquences d'une fourbure sont souvent très graves et peuvent compromettre l'avenir sportif et même parfois la vie du cheval.

Le document US 2010/0223893 A1 décrit un dispositif de traitement de fourbure équine, comprenant :
- une semelle, s'étendant selon des directions transversale et longitudinale, comportant une face proximale destinée à être fixée directement ou indirectement sous un sabot, et comprenant une face distale opposée à la face proximale,
- un patin, comportant une face proximale en appui contre la face distale de la semelle, et comportant une face distale convexe opposée à la face proximale.

Dans le dispositif décrit dans le document US 2010/0223893 A1, le patin est fixé sur la semelle au moyen de deux vis dans une position unique.

La face distale convexe du patin permet en principe d'induire un mouvement alternatif de bascule du sabot du cheval sous lequel est attaché le dispositif de traitement. Ce mouvement de bascule s'apparente aux mouvements se produisant lors de la marche en plein air du cheval. Le patin rend possible l'apparition de ce mouvement même lorsque l'animal est confiné à l'intérieur de son box (ce qui représente environ 23 heures par jour en moyenne).

Le mouvement alternatif de bascule a pour effet d'ouvrir et de fermer la valve du bourrelet coronaire (pulvinus coronae) du pied, provoquant par là un effet de pompage du sang dans le pied du cheval en vue de stimuler et/ou restaurer la vascularisation de celui-ci, et en particulier la vascularisation des tissus assurant la liaison entre le kéraphylle et le podophylle.

On constate toutefois que ce dispositif du document US 2010/0223893 A1 ne procure pas satisfaction dans tous les cas, et il y a un besoin pour améliorer son efficacité.

Pour qu'un mouvement alternatif de bascule se produise de façon efficace, il apparaît nécessaire de positionner longitudinalement le patin sur la semelle dans une position induisant un appui du sabot du cheval en équilibre le plus instable possible sur le sol. Dans la pratique, cette position longitudinale est difficile à prévoir avec précision car elle dépend de nombreux paramètres physiologiques et de la posture particulière propre au cheval atteint de fourbure.

Qui plus est, cette position longitudinale peut évoluer dans le temps au fur et à mesure de l'amélioration de la vascularisation et du rééquilibrage du pied : lors du traitement d'une fourbure, la troisième phalange du pied du cheval tend à se remettre progressivement en place par rapport au sabot, et lors du traitement d'une sole de trop faible épaisseur, la corne du pied peut pousser à une vitesse de 1 à 2 cm en 5 semaines.

Ainsi, la position fixe du patin du document US 2010/0223893 A1 peut s'avérer très différente de la position longitudinale induisant un appui en équilibre instable du sabot du cheval. La position longitudinale du patin de ce document induit parfois un appui selon un équilibre beaucoup trop stable du sabot du cheval pour que se produise, de façon efficace, un mouvement alternatif de bascule.

Les documents antérieurs US 2011/0197554 A1 et US 2011/0067366 A1 décrivent un dispositif selon le préambule de la revendication 1.

Dans ces documents antérieurs, un patin est en liaison glissière par rapport à la face inférieure d'une semelle par l'intermédiaire de trous oblongs et de boulons. Lorsque les boulons sont serrés, le patin est immobile par rapport à la face inférieure de la semelle. Lorsque les boulons sont desserrés, le patin est libéré en translation par rapport à la face inférieure de la semelle. Le patin peut ainsi librement coulisser par rapport à la face inférieure de la semelle en direction de la partie avant ou de la partie arrière de la semelle.

Lorsque le vétérinaire ou le maréchal-ferrant souhaite régler la position longitudinale du patin dans les documents antérieurs US 2011/0197554 A1 et US 2011/0067366 A1, il soulève le pied du cheval équipé du dispositif de façon à le tenir orienté dans une position dans laquelle la face inférieure de la semelle est sensiblement verticale. Dans cette orientation du dispositif, induite par l'orientation du pied du cheval, il y a un risque que, lorsque les boulons sont desserrés, le patin subisse un déplacement intempestif vers l'avant de la semelle sous l'effet de son propre poids.

Le desserrage des boulons présente alors l'inconvénient d'induire une perte accidentelle de la position longitudinale dans laquelle se situait le patin par rapport à la semelle avant le desserrage des boulons. Cela gêne le maréchal-ferrant ou le vétérinaire dans sa recherche de la position idéale induisant un appui du sabot du cheval sur le sol selon un équilibre le plus instable possible, afin de favoriser un mouvement alternatif de bascule et obtenir un effet de pompage du sang efficace dans le pied du cheval.

Un problème proposé par l'invention est d'augmenter l'efficacité d'une stimulation de la vascularisation d'un pied équin en permettant une disposition du patin convexe dans une position longitudinale induisant un appui du sabot du cheval sur le sol selon un équilibre le plus instable possible, afin de favoriser un mouvement alternatif de bascule et obtenir un effet de pompage du sang efficace dans le pied du cheval.

Selon un autre aspect, l'invention vise à accélérer le traitement du pied du cheval par stimulation de la vascularisation, en permettant de prendre en compte l'évolution progressive de l'appui sur le sol du sabot du cheval en cours de convalescence.

Simultanément, la présente invention vise à faciliter la tâche du maréchal-ferrant ou du vétérinaire lors de la recherche de la position longitudinale idéale du patin induisant un appui du sabot du cheval sur le sol selon un équilibre le plus instable possible.

Pour atteindre ces objets ainsi que d'autres, l'invention propose un dispositif de stimulation de la vascularisation d'un pied équin, comprenant :
- une semelle, s'étendant selon des directions transversale et longitudinale, comportant une face proximale destinée à être fixée directement ou indirectement sous un sabot, et comportant une face distale opposée à la face proximale,
- un patin, comportant une face proximale en appui contre la face distale de la semelle, et comportant une face distale convexe opposée à la face proximale,
- des moyens de glissière autorisant un déplacement longitudinal du patin sur la face distale de la semelle,
selon l'invention, le dispositif de stimulation comporte des moyens de déplacement qui, lorsqu'ils sont manoeuvrés par un utilisateur, déplacent le patin selon la direction longitudinale par rapport à la semelle.

Les moyens de glissière permettent de disposer le patin convexe dans une multitude de positions longitudinales sur la semelle. Le patin convexe peut ainsi être placé au mieux pour induire un appui du sabot du cheval sur le sol selon un équilibre le plus instable possible (ou à tout le moins suffisamment instable), afin de favoriser un mouvement alternatif de bascule et donc un pompage vasculaire efficace.

Les moyens de glissière autorisent également une évolution de la position longitudinale au fur et à mesure du traitement. On peut ainsi tenir compte, au fur et à mesure du traitement de la fourbure ou de la sole trop fine, de l'évolution progressive de l'appui du sabot du cheval sur le sol, ce qui permet de diminuer sensiblement le temps de traitement.

Les moyens de déplacement permettent une utilisation maîtrisée des moyens de glissière pour un bon positionnement du patin. Ainsi, lorsque les moyens de déplacement sont sollicités, ils déplacent le patin par rapport à la semelle. Au contraire, lorsque les moyens de déplacement ne sont pas actionnés, ils maintiennent le patin en position fixe par rapport à la semelle.

Il est ainsi possible de conserver le patin en une même position longitudinale sur la semelle entre deux réglages successifs par actionnement des moyens de déplacement, indépendamment de l'orientation du dispositif et du pied du cheval, et ce même lorsque des moyens de verrouillage (optionnels) sont déverrouillés.

Le maréchal-ferrant ou le vétérinaire peut ainsi plus aisément effectuer une recherche itérative par dichotomie de la position idéale induisant un appui du sabot du cheval sur le sol selon un équilibre le plus instable possible, afin de favoriser un mouvement alternatif de bascule et obtenir un effet de pompage du sang efficace dans le pied du cheval.

Avantageusement, on peut prévoir des moyens de verrouillage, aptes à immobiliser le patin selon la direction longitudinale par rapport à la semelle.

Les moyens de verrouillage assurent un maintien fiable du patin en position longitudinale sur la semelle, malgré les contraintes élevées induites par le poids du cheval reposant en appui sur le sol par l'intermédiaire du dispositif de stimulation.

Avantageusement, on peut prévoir que :
- la semelle comporte une face latérale s'étendant entre ses faces proximale et distale,
- les moyens de déplacement sont situés entre les faces proximale et distale de la semelle et sont accessibles selon une direction latérale, sensiblement perpendiculaire à la face latérale, pour être manoeuvrés.

Les moyens de déplacement étant accessibles selon une direction latérale pour leur manoeuvre, le réglage de la position longitudinale du patin convexe peut se faire après avoir monté le dispositif de stimulation sous le sabot du cheval et avec le sabot du cheval en appui sur le sol par l'intermédiaire du dispositif de stimulation. Lorsque le sabot du cheval est en appui sur le sol, le vétérinaire ou maréchal-ferrant manoeuvre les moyens de déplacement qui déplacent longitudinalement le patin jusqu'à le placer dans la position longitudinale qui lui paraît induire un appui selon un équilibre le plus instable possible, qui se manifeste quasi instantanément par un mouvement de bascule du sabot lors de l'atteinte de ladite position longitudinale.

En outre, l'accessibilité latérale des moyens de déplacement réduit fortement la pénibilité du travail du vétérinaire ou maréchal-ferrant, qui n'a ainsi pas à relever le pied du cheval à de multiples reprises pour procéder de façon itérative au réglage de la position longitudinale du patin convexe.

Pour autoriser une accessibilité latérale des moyens de déplacement, on peut de préférence prévoir que la semelle comporte une lumière latérale d'accès permettant d'accéder aux moyens de déplacement pour leur manoeuvre.

De préférence, les moyens de déplacement peuvent permettre un déplacement continu du patin sur la face distale de la semelle. Un déplacement continu permet une détermination précise de la position longitudinale susceptible d'induire un appui du sabot du cheval sur le sol le plus instable possible.

Pour ce faire, les moyens de déplacement comprennent de préférence une liaison hélicoïdale entre la semelle et le patin.

Avantageusement, les faces proximale et distale de la semelle peuvent former entre elles un angle non nul, de préférence un angle compris entre environ 5° et environ 35°.

La semelle comporte ainsi une épaisseur croissante depuis sa partie antérieure vers sa partie postérieure. Cette angulation permet de contrer au mieux la traction du tendon perforant sur la troisième phalange, et de limiter la rotation de celle-ci à l'intérieur de la boîte cornée.

De préférence, le dispositif peut comporter des lumières de fixation traversantes débouchant sur les faces proximale et distale de la semelle. Les lumières de fixation traversantes permettent l'introduction de clous et/ou de vis permettant de fixer la semelle, et donc le dispositif de stimulation, directement sous le sabot du cheval ou sous un fer disposé sous le sabot du cheval. A noter qu'on peut également prévoir une fixation du dispositif de stimulation sous une semelle intermédiaire disposée sous le sabot du cheval (ferré ou non) et contre laquelle vient en appui la semelle du dispositif de stimulation.

De préférence, la face distale du patin peut présenter un profil longitudinal convexe et un profil transversal plat. On induit ainsi un mouvement de bascule longitudinal du pied du cheval (dans le plan sagittal et selon la direction antéro-postérieure du cheval en pratique).

D'autres objets, caractéristiques et avantages de la présente invention ressortiront de la description suivante de modes de réalisation particuliers, faite en relation avec les figures jointes, parmi lesquelles :
- la figure 1 est une vue en perspective et de dessous d'un premier mode de réalisation de dispositif de stimulation selon l'invention ;
- la figure 2 est une vue en perspective et de dessus du dispositif de stimulation de la figure 1 ;
- la figure 3 est une vue de côté du dispositif de stimulation de la figure 1 ;
- la figure 4 est une vue arrière du dispositif de stimulation de la figure 1 ;
- la figure 5 est une vue latérale en coupe selon un premier plan du dispositif de stimulation de la figure 1 ;
- la figure 6 est une vue latérale en coupe selon un deuxième plan du dispositif de stimulation de la figure 1 ; et
- la figure 7 est une vue de dessous d'un deuxième mode de réalisation de dispositif de stimulation selon l'invention.

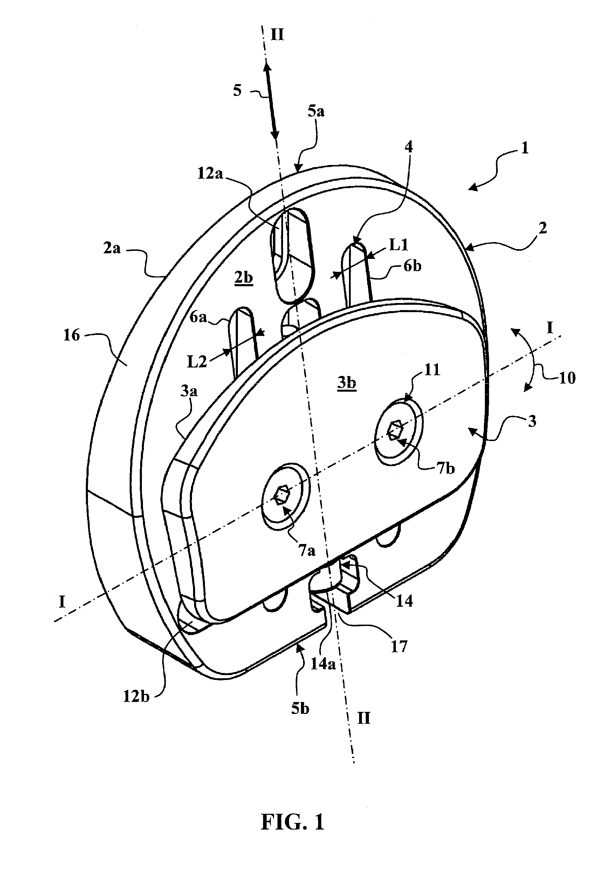

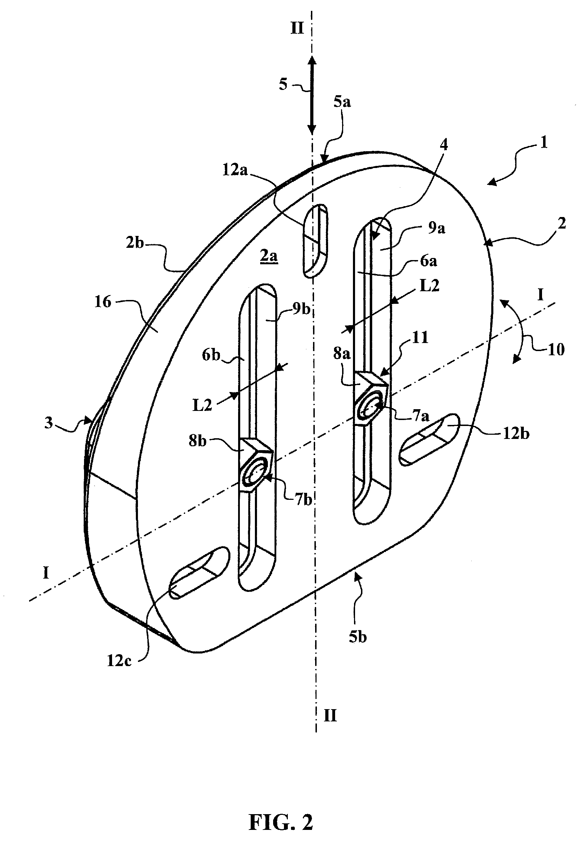

Sur les figures 1 à 6 est illustré un premier mode de réalisation de dispositif 1 selon l'invention pour la stimulation de la vascularisation du pied d'un équidé. Sur les figures 1 à 3, on voit plus particulièrement que le dispositif 1 comprend :
- une semelle 2, s'étendant selon des directions transversale I-I et longitudinale II-II, comportant une face proximale 2a destinée à être fixée directement ou indirectement sous un sabot, et comportant une face distale 2b opposée à la face proximale 2a,
- un patin 3, comportant une face proximale 3a en appui contre la face distale 2b de la semelle 2, et comportant une face distale 3b convexe opposée à la face proximale 3a.

La semelle 2 comporte des lumières de fixation 12a, 12b et 12c traversantes débouchant sur les faces proximale 2a et distale 2b pour permettre son accrochage direct ou indirect sous un sabot d'un cheval. Les lumières de fixation 12a à 12c peuvent ainsi recevoir, selon les besoins, des clous destinés à pénétrer le sabot du cheval ou des vis destinées à se fixer sur un fer à cheval préalablement disposé sous le sabot du cheval.

Pour contrer la traction exercée de façon permanente par le tendon perforant sur la troisième phalange, les faces proximale 2a et distale 2b de la semelle 2 forment entre elles un angle α non nul, compris de préférence entre environ 5° et environ 35°. La semelle 2 présente ainsi un profil longitudinal d'épaisseur croissante depuis la partie antérieure 5a en direction de la partie postérieure 5b.

Le dispositif 1 comporte en outre des moyens de glissière 4 autorisant un déplacement longitudinal du patin 3 sur la face distale 2b de la semelle 2. Le déplacement peut s'effectuer en direction de la partie antérieure 5a de la semelle 2 ou en direction de la partie postérieure 5b de la semelle 2, comme schématiquement illustré par la double flèche 5.

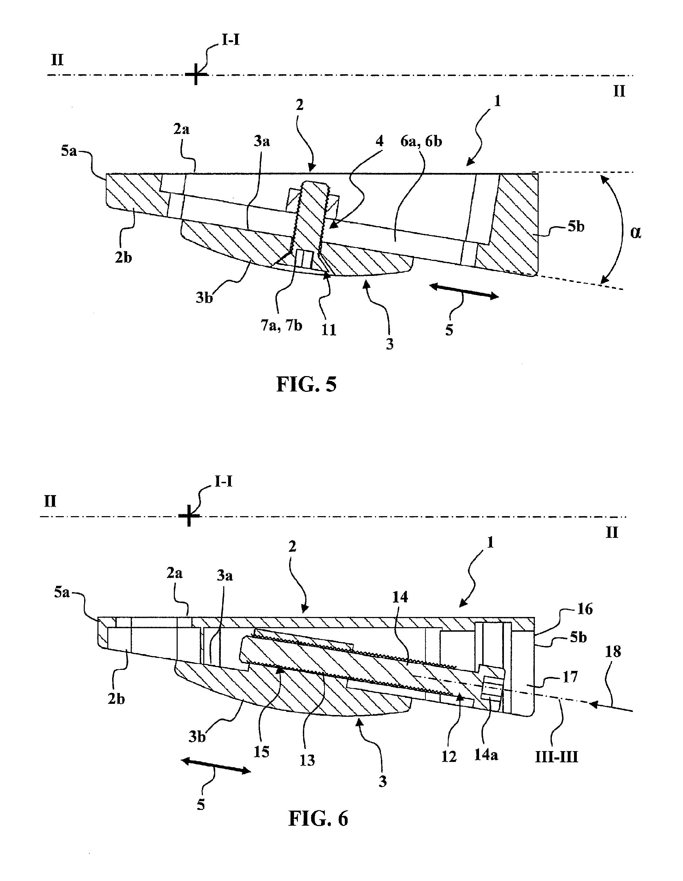

De façon plus détaillée, les moyens de glissière 4 comportent deux trous oblongs 6a et 6b traversant la semelle 2 et dans lesquels sont engagés deux boulons 7a et 7b traversant le patin 3 (voir la figure 5). Les écrous 8a et 8b présentent une section transversale supérieure à la largeur L1 des trous oblongs 6a et 6b. Les écrous 8a et 8b sont reçus à coulissement dans des rainures longitudinales 9a et 9b de largeur L2 supérieure à la section transversale des écrous 8a et 8b. Lorsque les écrous 8a et 8b des boulons 7a et 7b sont desserrés, le patin 3 peut être déplacé longitudinalement selon la direction longitudinale II-II sur la face distale 2b de la semelle 2 afin d'être positionné dans une position longitudinale induisant un appui selon un équilibre le plus instable possible du sabot du cheval sur le sol pour favoriser un mouvement alternatif de bascule du sabot. Ce déplacement longitudinal est provoqué par l'actionnement de moyens de déplacement 12 qui sont détaillés ultérieurement.

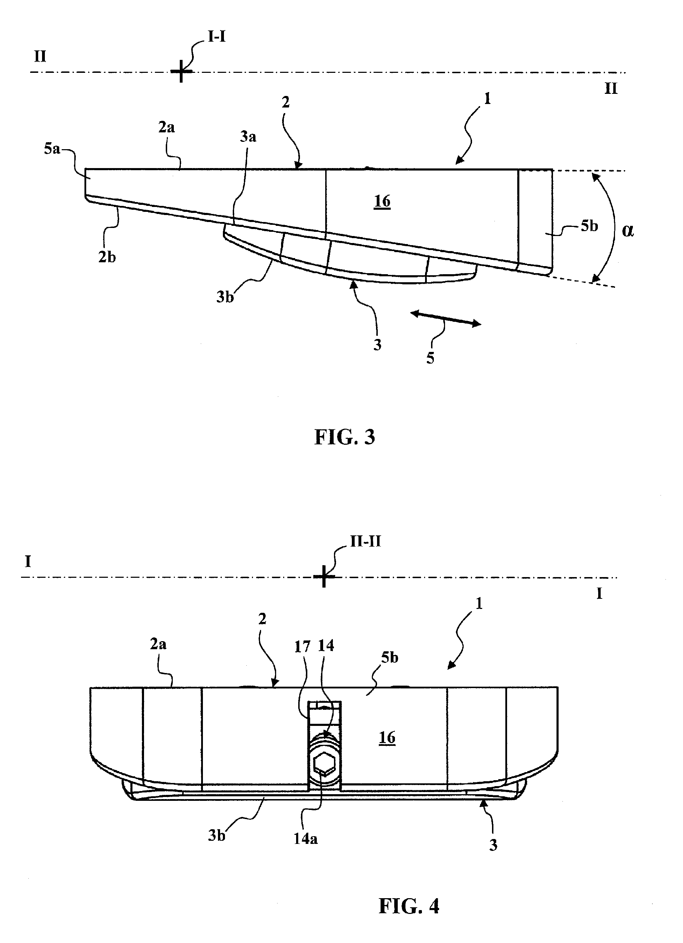

Etant donné que la face distale 3b du patin 3 présente un profil longitudinal convexe (figures 3 et 5) et un profil transversal plat (figure 4), ce mouvement de bascule est un mouvement d'oscillation autour de la direction transversale I-I et est schématiquement illustré sur la figure 1 par la double flèche 10. Lors de sa fixation sous le sabot du cheval, le dispositif 1 est fixé avec la direction longitudinale II-II parallèle au plan sagittal du cheval.

Une fois la position longitudinale adéquate déterminée pour le patin 3, le vétérinaire serre les boulons 7a et 7b qui servent alors de moyens de verrouillage 11 pour immobiliser le patin 3 selon la direction longitudinale II-II par rapport à la semelle 2.

Pour aider le vétérinaire ou maréchal-ferrant à positionner convenablement le patin 3 convexe le long de la direction longitudinale II-II, le dispositif 1 comporte des moyens de déplacement 12. La manoeuvre des moyens de déplacement 12 par l'utilisateur déplace le patin 3 selon la direction longitudinale II-II par rapport à la semelle 2 sélectivement en direction de la partie antérieure 5a ou en direction de la partie postérieure 5b. Une recherche itérative par dichotomie est ainsi facilitée :
- lorsque les moyens de déplacement 12 sont manoeuvrés, ils déplacent le patin 3 selon la direction longitudinale II-II en direction de la partie antérieure 5a ou postérieure 5b de la semelle 2,
- lorsque les moyens de déplacement 12 ne sont pas manoeuvrés, ils maintiennent le patin 3 en position fixe sur la semelle 2 selon la direction longitudinale II-II.

De façon plus détaillée, les moyens de déplacement 12 comprennent sur le patin 3 un trou fileté 13 dans lequel est engagée une vis filetée 14 portée par la semelle 2. Les moyens de déplacement 12 comprennent ainsi une liaison hélicoïdale 15 entre la semelle 2 et le patin 3. Une telle liaison permet un déplacement continu du patin sur la face distale 2b de la semelle 2 pour que le vétérinaire ou maréchal-ferrant puisse déplacer de façon progressive et fiable le patin 3 lors de son positionnement longitudinal sur la semelle 2.

On voit plus particulièrement sur les figures 1, 4 et 6 que :
- la semelle 2 comporte une face latérale 16 s'étendant entre ses faces proximale 2a et distale 2b,
- les moyens de déplacement 12 sont situés entre les faces proximale 2a et distale 2b de la semelle 2, et sont accessibles selon une direction latérale III-III, sensiblement perpendiculaire à la face latérale 16, pour être manoeuvrés.

De façon plus détaillée, l'accessibilité aux moyens de déplacement 12 pour leur manoeuvre est procurée par une lumière latérale d'accès 17. Un outil de vissage (en l'espèce une clé six pans) peut ainsi être engagé dans l'empreinte de vissage hexagonale 14a de la vis 14 selon le mouvement illustré par la flèche 18 sur la figure 6. Le vétérinaire ou maréchal-ferrant peut ensuite entraîner en rotation la vis 14 autour de la direction latérale III-III à l'aide de l'outil de vissage pour déplacer longitudinalement le patin 3 selon le mouvement illustré par la double flèche 5.

L'accessibilité latérale des moyens de déplacement 12 permet d'effectuer le réglage de la position du patin 3 pendant que le sabot du cheval repose sur le sol par l'intermédiaire du dispositif 1. L'atteinte de la position longitudinale induisant un appui suffisamment instable du sabot du cheval sur le sol sera perçue par le vétérinaire ou maréchal-ferrant par l'apparition d'un mouvement de bascule du sabot du cheval. Le positionnement longitudinal du patin 3 peut ainsi être effectué de façon plus rapide, très précise et de façon confortable pour le vétérinaire ou maréchal-ferrant, sans avoir à lever et poser le sabot du cheval de façon répétitive.

Grâce aux moyens de glissière 4 la position longitudinale du patin 3 sur la face distale 2b de la semelle 2 peut être réglée au fur et à mesure de la convalescence du cheval, période au cours de laquelle la troisième phalange va progressivement revenir à sa place normale dans la boîte cornée (pour une fourbure) ou au cours de laquelle la corne va pousser (pour une sole trop fine), ce qui a pour effet de modifier la direction d'appui du sabot du cheval sur le sol. Le suivi de cette évolution par une variation de la position longitudinale du patin 3 permet de toujours conserver une position optimale du patin 3 convexe pour garantir un appui instable du sabot du cheval au sol, ce qui accroît la vascularisation du pied et donc accélère le processus de convalescence.

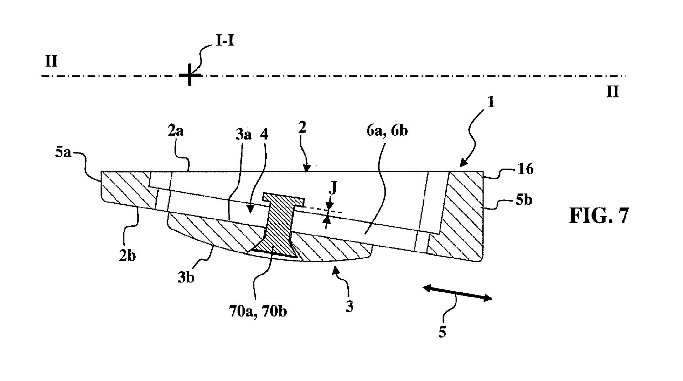

Sur la figure 7 est illustré un deuxième mode de réalisation de dispositif 1 de stimulation selon l'invention. Ce mode de réalisation diffère du mode de réalisation illustré sur les figures 1 à 6 en ce que les boulons 7a et 7b sont remplacés par des rivets 70a et 70b attachant le patin 3 à la semelle 2 avec un certain jeu J suffisant pour autoriser un déplacement à coulissement par translation bidirectionnelle du patin 3 sur la face distale 2b de la semelle 2 (selon le mouvement illustré par la double flèche 5). Dans ce deuxième mode de réalisation, le dispositif 1 comporte des moyens de déplacement 12 identiques à ceux du premier mode de réalisation décrit sur les figures 1 à 6, les moyens de déplacement 12 assurant cette fois simultanément la fonction de verrouillage pour immobiliser le patin selon la direction longitudinale II-II par rapport à la semelle 2. Pour ce faire, on pourra avoir recours à une liaison hélicoïdale 15 d'angle adapté pour éviter que le patin 3 se déplace longitudinalement sous les contraintes induites par l'appui du sabot du cheval sur le sol.

Dans le premier mode de réalisation illustré sur les figures 1 à 6, les moyens de verrouillage 11 constitués par les boulons 7a et 7b sont quelque peu redondants avec les moyens de déplacement 12 pour assurer la fonction de maintien immobile du patin 3 selon la direction longitudinale II-II. Toutefois, la présence de moyens de verrouillage 11 permet de limiter les contraintes dans les moyens de déplacement 12 dont la structure peut être moins robuste que celle des moyens de verrouillage 11.

La présente invention n'est pas limitée aux modes de réalisation qui ont été explicitement décrits, mais elle en inclut les diverses variantes et généralisations contenues dans le domaine des revendications ci-après.

## Revendications

1. Dispositif (1) de stimulation de la vascularisation d'un pied équin, comprenant :
- une semelle (2), s'étendant selon des directions transversale (I-I) et longitudinale (II-II), comportant une face proximale (2a) destinée à être fixée directement ou indirectement sous un sabot, et comportant une face distale (2b) opposée à la face proximale (2a),
- un patin (3), comportant une face proximale (3a) en appui contre la face distale (2b) de la semelle (2), et comportant une face distale (3b) convexe opposée à la face proximale (3a),
- des moyens de glissière (4) autorisant un déplacement longitudinal du patin (3) sur la face distale (2b) de la semelle (2),
**caractérisé en ce qu'**il comporte des moyens de déplacement (12) qui, lorsqu'ils sont manoeuvrés par un utilisateur, déplacent le patin (3) selon la direction longitudinale (II-II) par rapport à la semelle (2).

2. Dispositif (1) selon la revendication 1, **caractérisé en ce qu'**il comporte des moyens de verrouillage (11), aptes à immobiliser le patin (3) selon la direction longitudinale (II-II) par rapport à la semelle (2).

3. Dispositif (1) selon l'une des revendications 1 ou 2, **caractérisé en ce que** :
- la semelle (2) comporte une face latérale (16) s'étendant entre ses faces proximale (2a) et distale (2b),
- les moyens de déplacement (12) sont situés entre les faces proximale (2a) et distale (2b) de la semelle (2) et sont accessibles selon une direction latérale (III-III), sensiblement perpendiculaire à la face latérale (16), pour être manoeuvrés.

4. Dispositif (1) selon la revendication 3, **caractérisé en ce que** la semelle (2) comporte une lumière latérale d'accès (17) permettant d'accéder aux moyens de déplacement (12) pour leur manoeuvre.

5. Dispositif (1) selon l'une quelconque des revendications 1 à 4, **caractérisé en ce que** les moyens de déplacement (12) permettent un déplacement continu du patin (3) sur la face distale (2b) de la semelle (2).

6. Dispositif (1) selon la revendication 5, **caractérisé en ce que** les moyens de déplacement (12) comprennent une liaison hélicoïdale (15) entre la semelle (2) et le patin (3).

7. Dispositif (1) selon l'une quelconque des revendications 1 à 6, **caractérisé en ce que** les faces proximale (2a) et distale (2b) de la semelle (2) forment entre elles un angle (α) non nul, de préférence un angle (α) compris entre environ 5° et environ 35°.

8. Dispositif (1) selon l'une quelconque des revendications 1 à 7, **caractérisé en ce qu'**il comporte des lumières de fixation (12a-12c) traversantes débouchant sur les faces proximale (2a) et distale (2b) de la semelle (2).

9. Dispositif (1) selon l'une quelconque des revendications 1 à 8, **caractérisé en ce que** la face distale (3b) du patin (3) présente un profil longitudinal convexe et un profil transversal plat.
